# EUROPÄISCHE PATENTSCHRIFT

(11) **EP 1 897 646 B1**
(45) Veröffentlichungstag und Bekanntmachung des Hinweises auf die Patenterteilung: **28.04.2010**
(21) Anmeldenummer: 07016963.6
(22) Anmeldetag: 30.08.2007
(51) Int. Cl.: B23K 7/00, B22D 11/126, B23K 37/08

(54) **Einrichtung zum Entfernen von Sauerstoff-Schneidbärten an Werkstücken**
Device for removing oxygen cutting burrs
Dispositif de suppression de bavures d'oxygène sur des pièces à usiner

(30) Priorität: 08.09.2006 DE 102006042272
(43) Veröffentlichungstag der Anmeldung: 12.03.2008
(73) Patentinhaber: Aute AG Gesellschaft für autogene Technik, 2068 Hauterive (CH)
(72) Erfinder: Lotz, Horts K., 2068 Hauterive (CH)
(74) Vertreter: Aue, Hans-Peter

(56) Entgegenhaltungen:
- EP-A- 0 184 586
- DE-A1- 2 925 419
- DE-A1- 3 604 855
- US-A- 4 072 300
- US-A- 4 923 527
- US-B1- 6 334 906

## Beschreibung

Die Erfindung bezieht sich auf eine Einrichtung zum Entfernen von Sauerstoff-Schneidbärten an Werkstücken, insbesondere Knüppel und Blöcke aus Stahl für eine Strangbrennschneidmaschine in oder nach einer Stranggießanlage mit mindestens einem Rollengang, auf dem ein durch Schneidbrennen in Werkstücke zu trennender Gießstrang geführt wird, und einer den Rollengang bzw. Gießstrang überquerenden Brücke mit einem beweglichen Ausleger, an dem mindestens ein in Förderichtung des Gießstranges verfahrbarer Brennschneidwagen mit einem in vertikaler Richtung bewegbaren Schneidbrenner angeordnet ist, und einem Entbartungsbrenner. Eine solche Einrichtung ist aus der US 6 3 34 906 B1 bekannt.

Endlos vergossene Stränge aus Stahl in Stranggießanlagen müssen zur Weiterverarbeitung in transportable und den Endprodukten entsprechende Längen unterteilt werden. Diese überwiegend heißen Blöcke und Knüppel werden üblicherweise durch Sauerstoffschneidbrenner an einer Strangbrennschneidmaschine abgetrennt. Bei einer solchen Brennschneidmaschine verwandelt ein Sauerstoffschneidstrahl eines Schneidbrenners den auf Zündtemperatur gebrachten Stahl in eine abfließende Oxydschlacke und erzeugt so eine Fuge, die bei Bewegung in einen Schnitt auswächst.

Bei einer Stranggießanlage mit einem oder mehreren Gießsträngen fließen die Gießstränge auf in Förderrichtung parallel zueinander verlaufende Rollengänge. Die Brennschneidmaschine weist eine Brücke mit Ausleger auf, die quer über die Rollengänge ausgerichtet sind, wobei im Ausleger mindestens ein quer zum Gießstrang verfahrbarer Brennschneidwagen mit Schneidbrenner und Schneiddüse angeordnet ist, mit dem der Gießstrang in Blöcke bzw. Knüppel getrennt wird.

Mit der weltweiten Zunahme von Stahlstranggießanlagen, dem zunehmenden Einsatz von Sauerstoffbrennschneiden zum Unterteilen oder Längsteilen ges Gießstranges und zur Verbesserung bestehender Anlagen kommt dem maschinellen Entbarten, d.h. dem Entfernen der Sauerstoffschneidbärte an den Kanten von Blöcken und Knüppeln und dem Entfernen der Sauerstoffschneidperlen üblicherweise an den Ober- und Unterkanten, oft auch an den Seitenkanten derselben, möglichst direkt nach dem Querteilen oder Längsteilen, eine immer größere Bedeutung zu.

Üblicherweise verfährt der Schneidbrenner einer Brennschneidmaschine oder eines Brennerschneidwagens in einer Stranggießanlage horizontal mit von oben nach unten gerichteter Schneidflamme bzw. Schneidstrahl oder bogenförmig oberhalb und um einen unteren Eckpunkt des Werkstückes. Zunächst entsteht während des Schneidvorganges wenig Schneidbart am Werkstück, der aber im Schmelzzustand weiter nach unten wegläuft. Das nach unten ablaufende Material bildet aber bis zum Ende des Schneidvorganges einen dicken Block, d.h. einen Schneidbart, der mit einem Entbarter abgeschlagen werden muss.

Insbesondere preiswerte, sichere, wartungsgünstige und oft leicht nachträglich einbaubare Entbarter mit hoher Entbartungsrate sind unverzichtbar für hohe Produktionsleistungen. Es gibt zwar inzwischen eine große Anzahl gut arbeitender Entbarter, aber die Kosten, Entbartungsraten, der Wartungsaufwand, vorteilhafte Einbauorte im Produktionsablauf und vor allem Verletzungsgefahren und hohe Lärmpegel lassen noch viel zu wünschen übrig.

Bei allen bekannten Ausführungen von Entbartern, z.B. aus der EP 463 201 A1, EP 671 230 B1, EP 672 487 B1, EP 947 264 A2 und EP 1 172 159 A1, gelten folgende Entbartungsprinzipien mit zugehörigen wesentlichen Bauteilen und Mängeln:

Die Werkstücke liegen ortsfest mit dem vorderen oder dem hinteren Schneidbart über dem Entbarter zum Entbarten aus dem Werkstück heraus und werden durch Verschieben mittels Rollgang, Treibrollen oder Schiebeeinrichtung entbartet.

Die Werkstücke liegen zum Entbarten ortsfest mit dem vorderen oder hinteren Sauerstoffschneidbart über dem Entbarter aus dem Werkstück heraus und werden durch Verschieben des Entbarters oder durch das Drehen seiner Trommel gegen das fixierte Werkstück vom Schneidbart befreit. Die Entbarter tragen am ganzen Umfang verteilt runde, gegebenenfalls auch federnd aufliegende Scherklötze. Die schwere Trommel wird von unten gegen das Werkstück hydraulisch angedrückt und mit großem Kraftaufwand gedreht, so dass die Schneidbärte durchbrochen werden. Durch teilweises nur Abdrehen und Hochklappen bei zähen Stahlgüten kommen zu den hohen Kosten auch noch niedrige Entbartungsraten bei hohem Positionieraufwand.

Bei anderen Entbartungsvorgängen werden die Werkstücke mit Arbeits- oder Transportgeschwindigkeit auf einem Rollgang bewegt und der vordere und der hintere Sauerstoffschneidbart werden aus dem Werkstück heraus durch überholendes und danach durch gegenläufiges Verschieben des Entbarters entfernt.

Das Werkstück wird mit Arbeits- oder Transportgeschwindigkeit auf einem Rollgang bewegt, der vordere und der hintere Schneidbart werden aus dem Werkstück heraus durch überholendes oder gegenläufiges Drehen eines Entbarterrotors abgeschlagen. Die Entbarter verwenden zum Entbarten am ganzen Umfang und an der ganzen Länge des Rotors verteilt gelenkig befestigte kleine Hämmer, die sich bei hohen Drehzahlen des Rotors durch Fliehkraft aufstellen und so den darüber hinweglaufenden Sauerstoffschneidbart in vielen kleinen Stücken abschlagen. Die erforderliche hohe Drehzahl erzeugt auch hohe Fliehkräfte, die zu gefährlichem Umherfliegen von Bartresten führen oder teuere Maschinenverkleidungen notwendig machen.

Andere stehende oder verschiebende Entbarter sind mit geraden, horizontalen Scherleisten oder mit nebeneinander liegenden, gegebenenfalls auch elastisch heb- und senkbaren, viereckigen oder runden Scherklötzen ausgestattet.

Bei diesen Entbartern ist der Wartungs- und Ersatzteilaufwand sehr hoch und die Entbartungsraten lassen auch zu wünschen übrig.

Bei einem anderen Entbartungsprinzip wird der auf Zündtemperatur befindliche Schneidbart eines Werkstückes am Ende des Schneidvorganges mit einem zusätzlichen Gerät abgeblasen. Dieses Gerät kann ein Entbartungsbrenner sein, der mit Sauerstoff-Gas den Schneidbart abbläst. Somit sorgt der Entbartungsbrenner erst am Schluss des Schneidvorganges für einen kleinen oder gar keinen Schneidbart. Die abgeblasene Schneidbartschlacke, Zunder und Schneidperlen werden gegen eine Schutzplatte geblasen. Diese Schutzplatte kann mit Wasser berieselt werden, um diese sowie die Schlacke zu kühlen und wegzuspülen.

Es ist Aufgabe der Erfindung, ein Verfahren zum Brennschneiden von gegossenen Werkstücken und eine Einrichtung zum Entfernen von Sauerstoff-Schneidbärten an Werkstücken für eine solche Strangbrennschneidmaschine der eingangs genannten Art zu schaffen, mit denen der Brennschneidvorgang eines Gießstranges zu Werkstücken wesentlich verbessert und kostengünstiger durchgeführt werden kann.

Erfindungsgemäß wird die Aufgabe gemäß der beanspruchten Einrichtung dadurch gelöst, dass der Schneidbrenner der Brennschneidmaschine und der Entbartungsbrenner gemeinsam an einem Brennerträger befestigt und mechanisch miteinander verbunden sind, wobei der Entbartungsbrenner zusammen mit oder getrennt vom Schneidbrenner während des gesamten Schneidvorganges gleichzeitig in Bewegungsrichtung des Schneidbrenners entlang der Schneidfläche des Werkstückes mitgeführt ist.

Hieraus ergibt sich eine hohe Variabilität hinsichtlich der Einstellbarkeit und Verwendung des Schneidbrenners und des Entbartungsbrenners beim Schneid- und Schlackeabblasvorgang.

Zentrales Bauteil ist der gemeinsame Brennenträger, an dem der Schneidbrenner und der Entbartungsbrenner mechanisch verbunden miteinander angeordnet sind.

Der Entbartungsbrenner und der Schneidbrenner sind mit mindestens einer mit dem zu trennenden Gießstrang in Eingriff bringbaren und um ihre vertikale Achse drehbeweglichen Klemmgabel am Brennerträger mechanisch, gegebenenfalls auch starr, verbunden. Dabei weisen die abwärts gerichteten zwei Schenkel der Klemmgabel einen Abstand zueinander größer als die Gießstrangdicke auf. Des Weiteren sind die zwei Schenkel an jeweils einer Seite des Gießstranges versetzt zueinander kraft- und/oder formschlüssig anlegbar.

Die Klemmgabel kann verwendet werden, um den Gießstrang bzw. das Werkstück zu schieben. Die Klemmgabel wird solange um ihre vertikale Achse gedreht, bis die Schenkel der Klemmgabel versetzt zueinander an das Werkstück anstoßen, so dass die Klemmgabel schräg steht. Je nach Drehrichtung um ihre vertikale Achse kann die Klemmgabel stattdessen mit nur einem ihrer Schenkel am Gießstrang bzw. Werkstück anliegen. Dabei wird der Entbartungsbrenner mitgenommen, so dass dieser genau über der Schneidkante des Werkstückes platziert ist. Läuft der Gießstrang bzw. das Werkstück während des Förderweges weg, also gleitet aus der idealen Förderrichtung, so legt sich mindestens ein Schenkel der Klemmgabel immer wieder an den Gießstrang bzw. Werkstück an und nimmt den Entbartungsbrenner mit zur Schneidfläche des Werkstückes. Bei stärkeren Strangabweichungen kann auch das Drehlager der Klemmgabel quer zur Strangachse verschiebbar ausgeführt sein.

Durch diese Maßnahme wird die Handhabbarkeit der Strangbrennschneidmaschine und deren Einwirkung auf den Gießstrang verbessert. Der Gießstrang strebt während seines Förderweges infolge seine Instabilität durch die hohe Temperatur nach einer seitlichen Abweichung vom idealen Förderweg, so dass es zu einem nichtrechtwinkligen Trennschnitt beim Brennschneiden kommen kann. Die mit dem zu trennenden Gießstrang in Eingriff bringbare und drehbewegliche Klemmgabel verhindert dies, indem sich der rechte und linke Schenkel an jeweils einer Seite des Gießstranges kraft- und formschlüssig anlegt und so eine seitliche Abweichung des Gießstranges unterbindet.

Dadurch, dass der Entbartungsbrenner und der Schneidbrenner mechanisch miteinander verbunden sind, kann mit der Klemmgabel nicht nur der Entbartungsbrenner sondern auch der Schneidbrenner mitbewegt werden, um den Abstand zwischen beiden Brennern gleich zu halten.

Die Klemmgabel kann noch eine andere Funktion haben. Der Gießstrang bzw. das Werkstück bewegt sich mit einer bestimmten Geschwindigkeit entlang des Rollenganges der Stranggießanlage. Dabei legt sich die Klemmgabel mit ihren Schenkeln beidseitig an den Gießstrang bzw. Werkstück an, so dass Reibung zwischen diesen entsteht. Durch diese Anklemmung kann die über dem Werkstück befindliche Brennschneidmaschine mit dem Gießstrang in Gießgeschwindigkeit mitgezogen werden. Die Klemmgabel dient quasi als Anklemmhebel zur Bewegung der gesamten Brennschneidmaschine.

Wie erläutert, kann beim Anlegen der Klemmgabel an den Gießstrang dieser vom idealen, geradlinigen Förderweg abweichen, d.h. sich gewissermaßen verbiegen. Dies kann vorteilhaft verhindert werden, indem zwei gegenläufige Klemmgabeln am Brennerträger angeordnet sind, deren jeweils zwei Schenkel unmittelbar hintereinander an jeweils einer Seite des Gießstranges versetzt zueinander kraft- und/oder formschlüssig anlegbar sind. Die beiden Klemmgabeln verdrehen sich gegenläufig zueinander, um die an den Schenkeln beider Klemmgabeln auftretenden Kräfte auszugleichen.

Ferner kann vorgesehen sein, dass die Schenkel der Klemmgabel im Querschnitt vorzugsweise oval ausgebildet sind und zumindest jeweils eine spitzwinklige Messerschneide aufweisen, wobei die beiden Messerschneiden der beiden Schenkel gegenläufig zueinander ausgerichtet sind. Diese Messerscheiden dringen geringfügig in die Zunder behafteten Seitenflächen des Gießstranges bzw. Werkstückes ein und erhöhen die Reibung zur synchronen Mitnahme des Gießstranges bzw. Werkstückes beträchtlich.

Zweckmäßigerweise sind der Schneidbrenner, der Entbartungsbrenner und die Klemmgabel am Brennerträger in vertikaler und horizontaler Richtung verfahrbar.

Darüber hinaus sind der Schneidbrenner, der Entbartungsbrenner und die Klemmgabel magnetisch, motorisch, hydraulisch oder pneumatisch antreibbar ausgestaltet.

Bei einer Weiterbildung der erfindungsgemäßen Einrichtung ist im Bereich des Schneidstrahls des Entbartungsbrenners eine Schutzplatte zum Abprall der vom Werkstück abgeblasenen Schlacke angeordnet, die beispielsweise aus Kupfer besteht. Um die vom Werkstück während des Schneidvorganges abgeblasene Schlacke abzukühlen, kann die Schutzplatte wasserberieselt ausgebildet sein.

Der der Erfindung zu Grunde liegende Gedanke wird in der nachfolgenden Beschreibung anhand von Ausführungsbeispielen, die in den Zeichnungen dargestellt sind, näher beschrieben. Es zeigen:
- Fig. 1: eine Seitenansicht einer Sauerstoff- Strangbrennschneidmaschine mit hochklappbaren Ausleger,
- Fig. 2: eine Seitenansicht einer erfindungsgemäßen Einrichtung zum Entfernen von Sauerstoff- Schneidbärten an Werkstücken für eine Strangbrennschneidmaschine gemäß Fig. 1,
- Fig. 3: eine schematische Draufsicht auf einen Gießstrang mit einer Klemmgabel der Einrichtung gemäß Fig. 2, und
- Fig. 4: eine schematische Draufsicht auf einen Gießstrang mit zwei Klemmgabeln der Einrichtung gemäß Fig. 2.

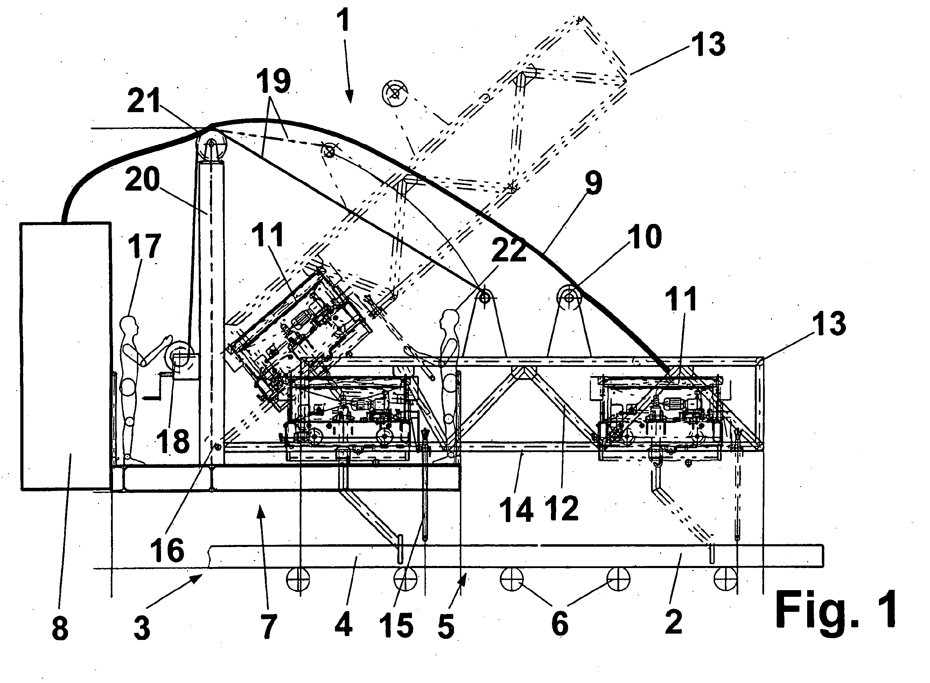

In Fig. 1 ist eine Sauerstoff-Strangbrennschneidmaschi-ne 1 für gegossene Werkstücke 2, insbesondere Blöcke und Knüppel aus Stahl, in oder nach einer teilweise gezeigten Stranggießanlage 3 dargestellt, wobei die Werkstücke 2 von einem von der Stranggießanlage 3 zugeführte Gießstrang 4 abgetrennt werden.

Über einem Rollengang 5, der aus einer Vielzahl von Rollen 6 besteht, auf denen der durch Schneidbrennen in Werkstücke 2 zu trennende Gießstrang 4 geführt wird, ist eine den Rollengang 5 überquerende Brücke 7 angeordnet. Diese Brücke 7 ruht auf einer nicht dargestellten Basis Auf der Brücke 7 befindet sich eine Versorgungseinheit 8, in die eine Steuer- und eine Medientafel einer Elektrostation und einer Gasstation integriert sind, von denen wassergekühlte, flexible Sammelleitungen 9 über Führungswalzen 10 zu einem noch zu erläuternden Brennschneidwagen 11 geführt werden.

Die den Rollengang 5 bzw. den Gießstrang 4 überquerende Brücke 7 besteht im Wesentlichen aus einem offenen, aus wassergekühlten Rohren 12 gebauten rahmen- bzw. gitterartigen Ausleger 13 besteht. Dabei kann der Ausleger 13 in Fachwerk-, Doppel- oder Einfachrohrausführung ausgebildet sein.

Im Ausleger ist ein Brennschneidwagen 11 auf Laufbahnen 14 geführt, der einen Schneidbrenner 15 zum Schneidbrennen des Gießstranges 4 in Werkstücke 2, wie Blöcke und Knüppel, aufweist. Wie in Fig. 1 durch Volllinien und Strichlinien dargestellt, ist der Brennschneidwagen 11 auf den Laufbahnen 14 längs zum Gießstrang 4 verfahrbar. Der Ausleger 13 kann zur unteren zugänglichen Wartungsseite hin für Wartung oder Reparatur, z.B. zum Düsenwechsel, Wechsel des Schneidbrenners 15 oder Austausch einer Sammelleitung 9, hochgeklappt werden.

Bei der Brennschneidmaschine 1 ist der an der Brücke 12 angelenkte Ausleger 13 am brückennahen Ende um ein Lager 16 manuell oder maschinell in eine schräg geneigte Position hochklappbar. Hierfür weist die den Rollengang 5 bzw. den Gießstrange 4 überquerende Brücke 7 zumindest einen Klappantrieb für den Ausleger 13 auf, wobei der Klappantrieb z.B. als von einer Bedienperson 17 zu betätigender Kurbelantrieb 18 ausgebildet ist.

Der Ausleger 13 kann somit bei Betätigung des Kurbelantriebes 18 durch die Bedienperson 17 mittels eines Seilzuges 19 über zumindest eine auf der Brücke 7 befestigte Stütze 20 mit einer oberen Führungsrolle 21 für den Seilzug 19 hochgeklappt werden. Sodann kann eine mit der Wartung und/oder Reparatur z.B. des Brennschneidwagens 11 befasste Person 22 beispielsweise einen Schneidbrenner 15 austauschen. Nach Beendigung der Wartungs- bzw. Reparaturarbeiten wird der Ausleger von der Bedienperson 17 durch Betätigung des Kurbelantriebes 18 wieder in ihre waagerrechte Position abgesenkt.

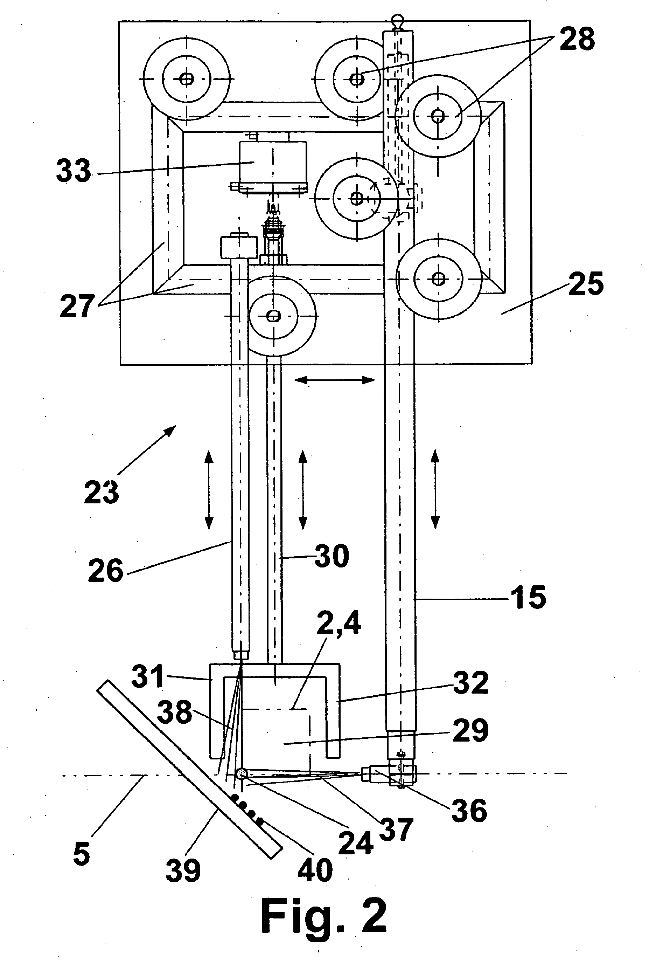

Fig. 2 zeigt eine Einrichtung 23 zum Entfernen von Sauerstoff-Schneidbärten 24 an Werkstücken 2 eines Gießstranges 4 für eine Brennschneidmaschine 1. Die Einrichtung 23 besteht zunächst aus einem Brennerträger 25, auf dem gemeinsam der Schneidbrenner 15 und ein Entbartungsbrenner 26 befestigt sind. Diese sind mechanisch, z.B. mittels Transportbahnen 27 und Förderrollen 28, miteinander verbunden, auf denen die Brenner 15, 26 in vertikaler und horizontaler Richtung verfahren werden können. Der Entbartungsbrenner 26 kann dadurch zusammen mit oder getrennt vom Schneidbrenner 15 während des gesamten Schneidvorganges gleichzeitig in Bewegungsrichtung des Schneidbrenners 15 entlang der Schneidfläche 23 des Werkstückes 2 bzw. des Gießstranges 4 mitgeführt werden.

Weiterhin trägt der Brennerträger 25 eine Klemmgabel 30, die um ihre vertikale Achse drehbeweglich ausgeführt ist. Die Klemmgabel 30 weist an ihrem unteren Ende zwei abwärts gerichtete Schenkel 31, 32 auf, die als Rundstäbe ausgebildet sind. Diese Schenkel 31, 32 besitzen einen Abstand zueinander, der größer ist als die Dicke des Gießstranges 4 bzw. des Werkstückes 2.

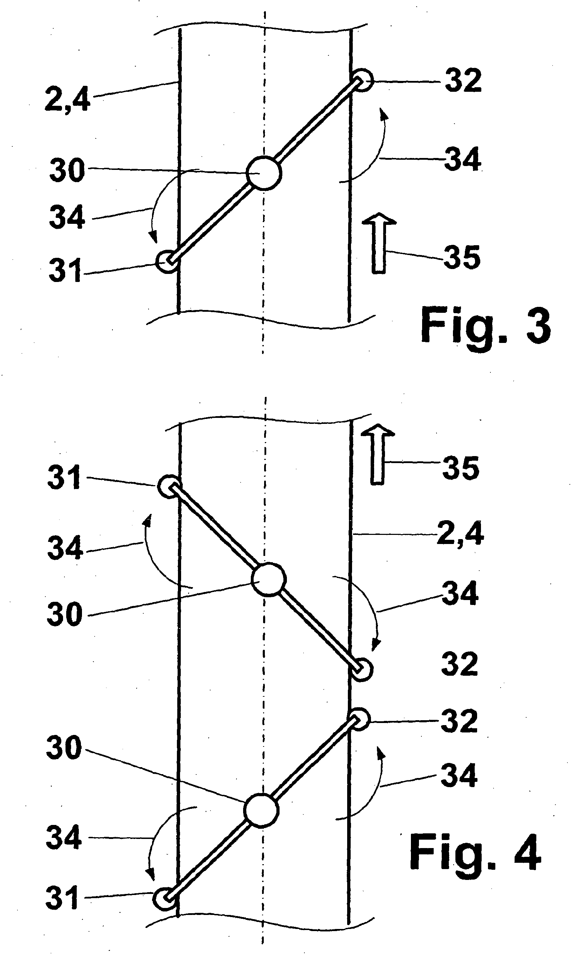

Im Ausführungsbeispiel sind der Entbartungsbrenner 26 und der Schneidbrenner 15 mit der Klemmgabel 30 mechanisch verbunden. Durch einen magnetischen, motorischen, hydraulischen oder pneumatischen Antrieb 33 kann die Klemmgabel 30 in einer Drehbewegung um ihre Längsachse verstellt werden, so dass sich die beiden Schenkel 31, 32 an jeweils eine Seitenfläche des in Werkstücke 2 zu trennenden Gießstranges 4 versetzt zueinander kraft- bzw. formschlüssig anlegen, wie dies schematisch in Fig. 3 dargestellt ist. Der Pfeile 34 zeigen die Drehrichtung der beiden Schenkel 31, 32 und Pfeil 35 zeigt die Bewegungsrichtung des Gießstranges 4.

Der Schneidbrenner 15 ist derart zum Gießstrang 4 bzw. zum von diesem abzutrennenden Werkstück 2 angeordnet, dass die Brennerdüse 36 horizontal zu diesem zeigt und somit der Schneidstrahl 37 quer zum Gießstrang 4 ausgerichtet ist. Der Flämmstrahl 38 am unteren freien Ende des Entbartungsbrenners 26 hingegen ist vertikal an der Schneidbrenner fernen Seite des Gießstranges 4 bzw. Werkstückes 2 ausgerichtet.

Im Bereich des Flämmstrahls 38 des Entbartungsbrenners 26 ist eine Schutzplatte 39 angeordnet, an der während des Schneidvorganges des Schneidbrenners 15 die vom Werkstück 2 abgeblasene Schlacke 40 vom sich bilden wollenden Schneidbart 24 an der Schneidbrenner fernen Schneidkante abprallen kann.

Während des gesamten Schneidvorganges des Schneidbrenners 15 wird dieser gemeinsam mit dem Entbartungsbrenner 26 gleichzeitig in Bewegungsrichtung des Schneidbrenners 15 entlang der Schneidfläche 29 des Werkstückes 2 bzw. Gießstranges 4 mitgeführt. Dabei bläst der Entbartungsbrenner 26 die sich während des Brennschneidens am Werkstück 2 bildende Schlacke 40 ab.

Fig. 4 zeigt ein Ausführungsbeispiel, bei dem zwei gegenläufige Klemmgabeln 30 am Brennerträger 25 angeordnet sind. Die jeweiligen Schenkelpaare 31,32 sind dabei unmittelbar hintereinander an jeweils einer Seite des Gießstranges 4 versetzt zueinander kraft- bzw. formschlüssig angelegt und verhindern somit ein Verbiegen des Gießstranges 4 vom idealen geradlinigen Förderweg während seiner Beförderung auf dem Rollengang 5 der Stranggießanlage 3. Damit wird der Gießstrang 4 in einem Geradauslauf gehalten.

Die Schenkel 31, 32 der Klemmgabel 30 können im Querschnitt oval ausgebildet sein und weisen zumindest jeweils eine spitzwinklige Messerschneide auf, wobei die beiden Messerschneiden der beiden Schenkel 31, 32 gegenläufig zueinander ausgerichtet sind.

### Liste der Bezugszeichen

- 1: Strangbrennschneidmaschine
- 2: Werkstück
- 3: Stranggießanlage
- 4: Gießstrang
- 5: Rollengang
- 6: Rolle
- 7: Brücke
- 8: Versorgungseinheit
- 9: Sammelleitung
- 10: Führungswalze
- 11: Brennschneidwagen
- 12: Rohre
- 13: Ausleger
- 14: Laufbahn
- 15: Schneidbrenner
- 16: Lager, Scharnier, Achse
- 17: Bedienperson
- 18: Kurbelantrieb
- 19: Seilzug
- 20: Stütze
- 21: Führungsrolle
- 22: Wartungsperson
- 23: Einrichtung
- 24: Schneidbart
- 25: Brennerträger
- 26: Entbartungsbrenner
- 27: Transportbahn
- 28: Förderrolle
- 29: Schneidfläche
- 30: Klemmgabel
- 31: Schenkel
- 32: Schenkel
- 33: Antrieb
- 34: Pfeil
- 35: Pfeil
- 36: Brennerdüse
- 37: Schneidstrahl
- 38: Flämmstrahl
- 39: Schutzplatte
- 40: Schlacke

## Patentansprüche

1. Einrichtung zum Entfernen von Sauerstoff-Schneidbärten an gegossenen Werkstücken (2), insbesondere Knüppel und Blöcke aus Stahl, für eine Strangbrennschneidmaschine (1) in oder nach einer Stranggießanlage (3) mit mindestens einem Rollengang (5), auf dem ein durch Schneidbrennen in Werkstücke (2) zu trennender Gießstrang (4) geführt ist, und einer den Rollengang (5) bzw. Gießstrang (4) überquerenden Brücke (7) mit einem beweglichen Ausleger (13), an dem mindestens ein in Förderichtung des Gießstranges (4) verfahrbarer Brennschneidwagen (11) mit einem in vertikaler Richtung bewegbaren Schneidbrenner (15) angeordnet ist, und einem Entbartungsbrenner (26), wobei der Entbartungsbrenner (26) zusammen mit oder getrennt vom Schneidbrenner (15) während des gesamten Schneidvorganges gleichzeitig in Bewegungsrichtung des Schneidbrenners (15) entlang der Schneidfläche (29) des Werkstückes (2) mitgeführt ist, und der Entbartungsbrenner (26) und der Schneidbrenner (15) mit mindestens einer mit dem zu trennenden Gießstrang (4) in Eingriff bringbare Klemmgabel (30) am Brennerträger (25) mechanisch verbunden sind, **dadurch gekennzeichnet, dass** der Schneidbrenner (15) der Brennschneidmaschine (1), der Entbartungsbrenner (26) und die Klemmgabel (30) gemeinsam an einem Brennerträger (25) befestigt und mittels Transportbahnen (27) und Förderrollen (28), auf denen die Brenner (15,26) in vertikaler und horizontaler Richtung verfahrbar und die Klemmgabel (30) um ihre vertikale Achse drehbeweglich sind, mechanisch miteinander verbunden sind, und dass die Schenkel (31,32) der Klemmgabel (30) im Querschnitt vorzugsweise oval ausgebildet sind und zumindest jeweils eine spitzwinklige Messerschneide aufweisen, wobei die beiden Messerschneiden der beiden Schenkel (31,32) gegenläufig zueinander ausgerichtet sind.

2. Einrichtung nach Anspruch 1, **dadurch gekennzeichnet, dass** die abwärts gerichteten zwei Schenkel (31,32) der Klemmgabel (30) einen Abstand zueinander größer als die Gießstrangdicke aufweisen und die zwei Schenkel (31,32) an jeweils einer Seite des Gießstranges (4) versetzt zueinander kraft- und/oder formschlüssig anlegbar sind.

3. Einrichtung nach Anspruch 1, **dadurch gekennzeichnet, dass** zwei gegenläufige Klemmgabeln (30) am Brennerträger (25) angeordnet sind, deren jeweils zwei Schenkel (31,32) unmittelbar hintereinander an jeweils einer Seite des Gießstranges (4) versetzt zueinander kraft- und/oder formschlüssig anlegbar sind.

4. Einrichtung nach Anspruch 1 und 2, **dadurch gekennzeichnet, dass** der Schneidbrenner (15), der Entbartungsbrenner (26) und die Klemmgabel (30) am Brennerträger (25) in vertikaler und horizontaler Richtung verfahrbar sind.

5. Einrichtung nach Anspruch 1, **dadurch gekennzeichnet, dass** der Schneidbrenner (15), der Entbartungsbrenner (26) und die Klemmgabel (30) magnetisch, motorisch, hydraulisch oder pneumatisch antreibbar sind.

6. Einrichtung nach Anspruch 1, **dadurch gekennzeichnet, dass** im Bereich des Flämmstrahls (38) des Entbartungsbrenners (26) eine Schutzplatte (39) zum Abprall der vom Werkstück (2) abgeblasenen Schlacke (40) angeordnet ist.

7. Einrichtung nach Anspruch 6, **dadurch gekennzeichnet, dass** die Schutzplatte (39) wasserberieselt ausgebildet ist.

## Claims

1. A device for removal of oxygen cutting burrs on cast workpieces (2), in particular billets and blooms out of steel, for an oxygen strand cutting machine (1) in or downstream of a continuous casting plant(3) with at least one roller conveyor (5) on which a cast strand (4) to be separated into workpieces (2) by flame cutting is lead, and a bridge (7) crossing the roller conveyor (5) and/or the cast strand (4), with a movable extension arm (13) on which at least a flame cutting carriage (11) movable in cast strand (4) travel direction is arranged with a flame cutting torch (15) movable in vertical direction, and a deburring torch (26), with the deburring torch (26) being carried along simultaneously together with or separated from the cutting torch (15) in travel direction of the cutting torch (15) during the entire cutting procedure alongside the workpiece (2) cutting area (29), and the deburring torch (26) and the cutting torch (15) being mechanically connected to the torch carrier (25) with at least a clamping fork (30) engageable into the cast strand (4) to be separated, **characterized in that** the cutting torch (15) of the flame cutting machine (1), the deburring torch (26) and the clamping fork (30) are commonly secured to a torch carrier (25) and mechanically connected to each other by means of transport tracks (27) and conveyor rollers (28) upon which the torches (15, 26) are movable in vertical and horizontal directions and the clamping fork (30) is rotatable around its vertical axis, and that the branches (31,32) of the clamping fork (30) are preferably formed in oval shape in cross-section, and have at least one acute-angled knife edge each, with the two knife edges of the two branches (31, 32) being aligned in opposite direction towards each other

2. Device according to claim 1, **characterized in that** the two downward branches (31, 32) of the clamping fork (30) have a distance to each other greater than the thickness of the cast strand, and the two branches (31, 32) can be applied on one side each of the cast strand (4) offset to each other in positive and/or non-positive engagement.

3. A device according to claim 1, **characterized in that** two counterrotating clamping forks (30) are located on the torch carrier (25), the two branches (31, 32) each of which can be applied directly one after the other on one side each of the cast strand (4) offset to each other in positive and/or non-positive engagement.

4. Device according to claim 1 and 2, **characterized in that** the cutting torch (15), the deburring torch (26) and the clamping fork (30) on the torch carrier (25) are movable in vertical and horizontal direction.

5. Device according to claim 1, **characterized in that** the cutting torch (15), the deburring torch (26) and the clamping fork (30) are driveable magnetically, hydraulically, pneumatically or by motor.

6. Device according to claim 1, **characterized in that** in the area of the scarfing beam (38) of the deburring torch (26) a protective plate (39) is located for rebound of the slag (40) blown off from the workpiece (2).

7. Device according to claim 6, **characterized in that** the protective plate (39) is formed irrigated with water.

## Revendications

1. Dispositif destiné à enlever des bavures d'oxycoupage sur des pièces coulées (2), en particulier sur des billettes et lingots en acier, pour une machine d'oxycoupage de barres (1) à l'intérieur ou à la suite d'une installation de coulée continue (3) avec au moins un transporteur à rouleaux (5) sur lequel est guidé une barre de coulée (4) à tronçonner par oxycoupage en pièces (2), ainsi qu'avec un pont (7) qui franchit ledit transporteur à rouleaux (5) ou bien la barre de coulée (4) et qui présente une flèche mobile (13) sur laquelle est disposé au moins un chariot d'oxycoupage (11) déplaçable dans la direction de transport de ladite barre de coulée (4) et comprenant un chalumeau oxycoupeur (15) mobile dans le sens vertical, et avec un chalumeau à ébavurer (26), ledit chalumeau à ébavurer (26) étant entraîné conjointement avec ou séparément du chalumeau oxycoupeur (15), durant l'ensemble de l'opération de coupage, en même temps dans la direction de déplacement du chalumeau oxycoupeur (15) le long de la surface de coupe (29) de la pièce (2), et le chalumeau à ébavurer (26) ainsi que le chalumeau oxycoupeur (15) étant reliés mécaniquement, sur le porte-chalumeaux (25), à au moins une fourche de serrage (30) qui peut être mise en prise avec la barre de coulée (4) à tronçonner, **caractérisé par le fait que** ledit chalumeau oxycoupeur (15) de la machine d'oxycoupage (1), le chalumeau à ébavurer (26) et ladite fourche de serrage (30) sont fixés ensemble sur un porte-chalumeaux (25) et sont reliés mécaniquement entre eux par le biais de voies de transport (27) et de rouleaux transporteurs (28) sur lesquels lesdits chalumeaux (15, 26) sont déplaçables dans les sens vertical et horizontal et sur lesquels ladite fourche de serrage (30) est mobile en rotation autour de son axe vertical, et que les branches (31, 32) de la fourche de serrage (30) sont de préférence ovales en coupe transversale et présentent au moins respectivement un tranchant acutangulaire, les deux tranchants des deux branches (31, 32) étant orientés en sens opposé l'un par rapport à l'autre.

2. Dispositif selon la revendication 1, **caractérisé par le fait que** les deux branches (31, 32) de la fourche de serrage (30), qui sont orientées vers le bas, présentent une distance l'une de l'autre qui est supérieure à l'épaisseur de la barre de coulée et que les deux branches (31, 32) peuvent être appliquées par adhérence et/ou à engagement positif, décalées l'une par rapport l'autre, sur respectivement un côté de ladite barre de coulée (4).

3. Dispositif selon la revendication 1, **caractérisé par le fait que** deux fourches de serrage (30) opposées sont disposées sur ledit porte-chalumeaux (25), dont respectivement les deux branches (31, 32) peuvent être appliquées, directement l'une derrière l'autre et décalées l'une par rapport l'autre, par adhérence et/ou à engagement positif sur respectivement un côté de ladite barre de coulée (4).

4. Dispositif selon la revendication 1 et 2, **caractérisé par le fait que** ledit chalumeau oxycoupeur (15), ledit chalumeau à ébavurer (26) et ladite fourche de serrage (30) sont déplaçables dans les directions verticale et horizontale sur le porte-chalumeaux (25).

5. Dispositif selon la revendication 1, **caractérisé par le fait que** ledit chalumeau oxycoupeur (15), ledit chalumeau à ébavurer (26) et ladite fourche de serrage (30) peuvent être entraînés de façon magnétique, par moteur, de manière hydraulique ou pneumatique.

6. Dispositif selon la revendication 1, **caractérisé par le fait qu'**une plaque protectrice (39) destinée à faire rebondir le laitier (40) détaché par soufflage de la pièce (2) est disposée au niveau du jet de flamme (38) du chalumeau à ébavurer (26).

7. Dispositif selon la revendication 6, **caractérisé par le fait que** ladite plaque protectrice (39) est réalisée de manière à être arrosée d'eau.
